# EUROPÄISCHE PATENTSCHRIFT

(11) **EP 1 852 213 B1**
(45) Veröffentlichungstag und Bekanntmachung des Hinweises auf die Patenterteilung: **16.07.2008**
(21) Anmeldenummer: 07007673.2
(22) Anmeldetag: 14.04.2007
(51) Int. Cl.: B23Q 1/00, F16L 27/087

(54) **Einrichtung zur Übertragung von Druckmittel von einem festen zu einem rotierenden Teil**
Device for transmitting pressure from a steady to a rotating part
Dispositif de transmission de pression d'une pièce fixe à une pièce tournante

(30) Priorität: 03.05.2006 DE 102006020783
(43) Veröffentlichungstag der Anmeldung: 07.11.2007
(73) Patentinhaber: Hiestand, Karl, D-88630 Pfullendorf (DE)
(72) Erfinder: Hiestand, Karl, D-88630 Pfullendorf (DE)
(74) Vertreter: Engelhardt, Volker

(56) Entgegenhaltungen:
- EP-A1- 0 667 479
- DE-A1- 3 306 570

## Beschreibung

Die Erfindung bezieht sich auf eine Einrichtung zur Übertragung einer Hydraulikflüssigkeit aus einem ortsfest angeordneten ersten Bauteil in ein in dieses eingesetztes rotierend antreibbares zweites Bauteil, insbesondere zur Überführung eines Druckmittels von einem Drehverteiler in einen Hohlspannzylinder, wobei zwischen den beiden Bauteilen mindestens eine Ringkammer vorgesehen ist, die an eine Zuführungsleitung sowie an eine zu einem Verbraucher führende Druckmittelleitung für das zu übertragende Medium angeschlossen ist, und beiderseits der Ringkammer jeweils ein mit dieser verbundener axial und/oder radial gerichteter Dichtspalt verläuft, die in eine Sammelkammer münden und diese über eine Rücklaufleitung an einen Sammelbehälter zur Aufnahme der aus den Dichtspalten austretenden Leckageflüssigkeit angeschlossen sind.

Eine derartige Druckmittelübertragungseinrichtung ist durch die DE 33 06 570 A1 bekannt. Die Rückführung der aus den Dichtspalten austretenden Leckflüssigkeit ist hierbei jedoch mit erheblichen Schwierigkeiten verbunden, da der Abfluss der oftmals großen Mengen an Leckflüssigkeit nur mit Hilfe der Schwerkraft erfolgt. Die Sammelkammer ist somit stets vertikal unterhalb des Drehverteilers anzuordnen. Auch ist die Abflussleitung mit Gefälle zu verlegen und derart zu bemessen, dass in dieser kein Stau entsteht. Dennoch ist nicht ausgeschlossen, dass bei einem Stau Leckageflüssigkeit aus den vielfach verwendeten Labyrinthdichtungen austritt und Betriebsstörungen dadurch ausgelöst werden. Vor allem aber ist von Nachteil, dass der Einsatzbereich einer solchen Druckmittelübertragungseinrichtung, bedingt durch die erforderliche Einbaulage, sehr begrenzt ist und bei Werkzeugmaschinen, bei denen von Druckmittel beaufschlagte etwa vertikal angeordnete Servoeinrichtungen vorgesehen sind, mitunter nicht eingesetzt werden können.

Aufgabe der Erfindung ist es daher, die Einrichtung zur Übertragung einer Hydraulikflüssigkeit aus einem ortsfest angeordneten ersten Bauteil in ein in dieses eingesetztes rotierend antreibbares zweites Bauteil derart weiterzubilden, dass stets, und zwar unabhängig von der Einbaulage des Drehverteilers, eine zufriedenstellende Abführung der anfallenden Leckageflüssigkeit gewährleistet ist. Ein Anstauen von Leckageflüssigkeit in der Sammelkammer und in der Rücklaufleitung soll zuverlässig vermieden werden, auch soll die Leckageflüssigkeit einem Sammelbehälter zugeführt werden können, der über dem Niveau des Drehverteilers angeordnet ist. Des Weiteren soll es möglich sein, den Abfluss der Leckageflüssigkeit zu regeln und deren Abführung in Abhängigkeit von der jeweils anfallenden Menge vorzunehmen, so dass ein vielseitiger und großer Einsatzbereich gegeben ist.

Gemäß der Erfindung wird dies bei einer Druckmittelübertragungseinrichtung der vorgenannten Gattung dadurch erreicht, dass in die an die Sammelkammer angeschlossene Rücklaufleitung ein Förderaggregat eingesetzt ist, mittels dem die Leckageflüssigkeit aus der Sammelkammer absaugbar und/oder unter Druck dem Sammelbehälter zuführbar ist.

Das Förderaggregat kann als beidseitig von Druckmittel beaufschlagbarer in einen Zylinder eingesetzter Förderkolben ausgebildet sein, dessen zugeordnete Druckräume über Rückschlagventile wechselweise mit der Sammelkammer und dem Sammelbehälter verbindbar sind. Es ist aber auch möglich, das Förderaggregat als antreibbaren in einen Zylinder eingesetzten Förderlkolben auszubilden, dessen zugeordneter Füll- und Druckraum über Rückschlagventile miteinander verbindbar sind und wobei der Füllraum über ein Absperrventil an die Sammelkammer und der Druckraum über ein Absperrventil an den Sammelbehälter anschließbar sind.

Nach einer andersartigen Ausgestaltung kann das Förderaggregat auch aus einer motorisch antreibbaren Flügelzellenpumpe oder aus einer Zahnradpumpe bestehen, deren von einem Rotor überdeckten Saug- und Druckkanäle wechselseitig mit der Sammelkammer und dem Sammelbehälter verbindbar sind.

Zweckmäßig ist es des Weiteren, das Förderaggregat über eine Steuereinrichtung in Abhängigkeit von dem in der Sammelkammer und/oder einer Ringkammer herrschenden Druck und/oder einer Füllmenge zu steuern, wobei die Sammelkammer mit einem Füllstandssensor versehen sein sollte, der an die Steuereinrichtung angeschlossen ist, und in einer in dem ortstfest angeordneten Bauteil vorgesehenen Ringkammer kann ein Drucksensor eingesetzt sein, der mit der Steuereinrichtung elektrisch verbunden ist.

Ferner ist es angezeigt, um zu schnelle Verstellbewegungen der Förderkolben zu vermeiden, die Fließgeschwindigkeit des in den jeweiligen Druckraum des Förderkolbens einströmenden Druckmittels zu regeln, indem zum Beispiel das in die Druckräume der Förderkolben einströmende Druckmittel jeweils über eine vorzugsweise einstellbare Drossel geleitet wird.

Angezeigt ist es auch, das Förderaggregat für vorzugsweise einstellbare Zeitspannen oder impulsweise einschaltbar auszustatten. Dies kann dadurch bewerkstelligt werden, dass die Steuereinrichtung mit einem Zeitschaltrelais versehen wird, mittels dem den Förderkolben zugeordnete Magnetventile oder der Antriebsmotor der Flügelzellen- bzw. Zahnradpumpe zeitweise eingeschaltet werden.

Wird eine Druckmittelübertragungseinrichtung der eingangs genannten Art gemäß der Erfindung ausgebildet, so ist es möglich, die anfallende Leckageflüssigkeit unabhängig von der Einbaulage des Drehverteilers stets zuverlässig abzuführen, so dass dadurch bedingte Betriebsstörungen weitgehend vermieden sind. Die Leckageflüssigkeit wird nämlich zunächst aus der Sammelkammer abgesaugt und unter Druck einem Sammelbehälter zugeführt. Dieser kann demnach auch vertikal über dem Drehverteiler und die Rückführungsleitung kann verwinkelt angeordnet werden. Ein großer Einsatzbereich der Einrichtung ist demnach gegeben.

Vor allem aber ist von Vorteil, dass das Absaugen der Leckageflüssigkeit aus der Sammelkammer und deren Überführung in den Sammelbehälter in Abhängigkeit von dem jeweiligen Betriebszustand der Druckmittelübertragungseinrichtung auf unterschiedliche Weise geregelt werden kann. Auch dadurch wird das Betriebsverhalten der Einrichtung begünstigt und die Betriebssicherheit wird erhöht, da auch bei einem hohen Anteil an Leckageflüssigkeit mit Sicherheit ein Anstauen von Leckageflüssigkeit in der Sammelkammer und/oder in der Rücklaufleitung vermieden wird. Mit geringem Bauaufwand ist somit eine erhebliche Verbesserung des Betriebsverhaltens einer Druckmittelübertragungseinrichtung zu erzielen.

In der Zeichnung ist ein Ausführungsbeispiel einer Einrichtung zur Übertragung einer Hydraulikflüssigkeit aus einem ortsfesten Bauteil in ein rotierendes Bauteil dargestellt, das gemäß der Erfindung mit unterschiedlich ausgebildeten Förderaggregaten zur Abführung der anfallenden Leckageflüssigkeit ausgestattet ist. Nachfolgend sind drei Ausführungsvarianten des Förderaggregates im Einzelnen erläutert. Hierbei zeigen, jeweils in einem Axialschnitt
- Figuren 1 und 2: die Druckmittelzuführungseinrichtung mit angeflanschtem Förderaggregat, das als beidseitig beaufschlagbarer Förderkolben ausgebildet ist, in zwei unterschiedlichen Betriebsstellungen,
- Figuren 3 und 4: die Druckmittelzuführungseinrichtung nach Figur 1 mit einem einseitig wirkenden Förderkolben als Förderaggregat, ebenfalls in zwei Betriebsstellungen, und
- Figur 5: die Druckmittelübertragungseinrichtung nach Figur 1 mit einer Flügelzellenpumpe als Förderaggregat.

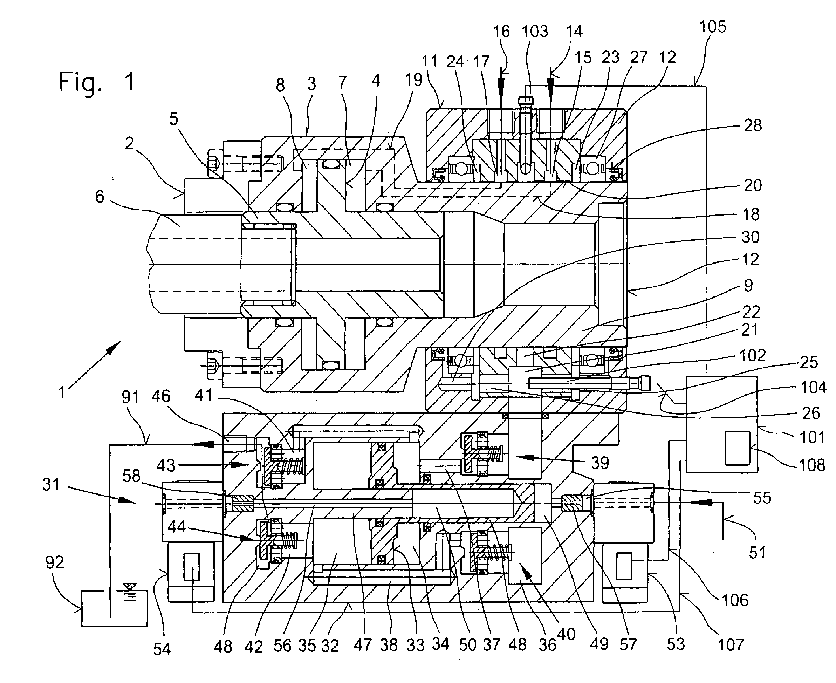

Die in den Figuren 1 bis 5 dargestellte und jeweils mit 1 bezeichnete Einrichtung ist an einer Maschinenspindel 2 einer Werkzeugmaschine angeflanscht und dient zur Zuführung von Hydraulikflüssigkeit mittels eines Drehverteilers 11 aus Zuführungsleitungen 14 oder 16 in einen Zylinder 3, in dem ein beidseitig von dem zugeführten Druckmittel wechselweise beaufschlagbarer Kolben 4 verschiebbar eingesetzt ist. Der Drehverteiler 11 besteht hierbei aus einem ortsfest angeordneten zweiteilig gestalteten ersten Bauteil 12 und einem rotierend angetriebenen zweiten Bauteil 13, das durch einen Ansatz 9 an dem Zylinder 3 gebildet ist.

Die Zuführungsleitungen 14 und 16 sind an in das erste Bauteil 12 eingearbeitete Ringkammern 15 bzw. 17 angeschlossen, von denen Kanäle 18 bzw. 19 zu den dem Kolben 4 zugeordneten Druckräumen 7 bzw. 8 führen. Durch wechselseitiges Beaufschlagen des Kolbens 4 kann somit eine Zugstange 6, die mit der Kolbenstange 5 des Kolbens 4 fest verbunden ist, nach links bzw. nach rechts verstellt werden, um zum Beispiel die Spannbacken eines Kraftspannfutters entsprechend zu betätigen.

Zwischen den beiden Bauteilen 12 und 13, die mittels Wälzlager 27 aufeinander abgestützt sind, ist ein Dichtspalt 20 gebildet, der nach außen beiderseits durch Labyrinthdichtungen 28 verschlossen ist. Aus dem Dichtspalt 20 tritt jedoch mehr oder weniger Leckageflüssigkeit aus, die in Ringräumen 23 und 24 aufgefangen wird. Die Ringräume 23 und 24 sind über Bohrungen 25 und 26 an eine Sammelkammer 21 angeschlossen, so dass die Leckageflüssigkeit in diese gelangen kann. In die Sammelkammer 21 münden auch eine Ringkammer 22, die zwischen den beiden mit den Zuführungsleitungen 14 und 16 verbundenen Ringkammern 15 und 17 angeordnet ist, sowie Bohrungen 29 und 30, die die durch die Wälzlager 28 austretende Leckageflüssigkeit aufnehmen. In der Sammelkammer 21 wird demnach die gesamte in dem Drehverteiler 11 anfallende Leckageflüssigkeit aufgefangen.

Um die in der Sammelkammer 21 befindliche Leckageflüssigkeit rasch und zuverlässig in einen Sammelbehälter 92 abführen zu können, ist gemäß den Figuren 1 und 2 bzw. 3 und 4 bzw, 5 jeweils ein unterschiedlich ausgebildetes Förderaggregat 31 bzw. 61 bzw. 81 vorgesehen, mittels dem die Leckageflüssigkeit aus der Sammelkammer 21 abgesaugt und unter Druck über eine Rücklaufleitung 91 einem Sammelbehälter 92 zugeführt wird.

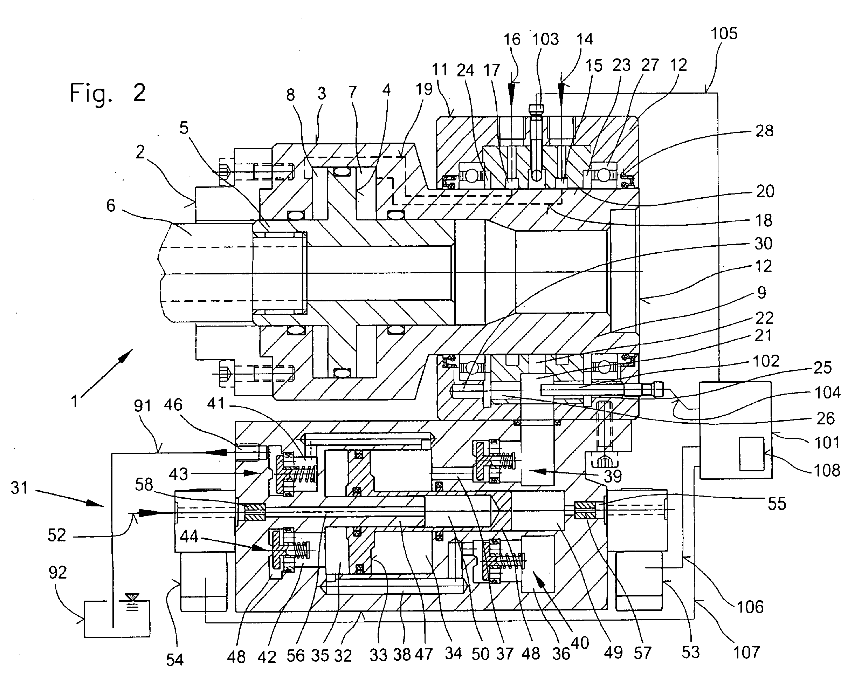

Gemäß den Figuren 1 und 2 ist das Förderaggregat 31 durch einen in einen Zylinder 32 eingesetzten Förderkolben 33 gebildet, dessen Druckräume 34 und 35 wechselweise an einen Zuführungskanal 36, in den die Sammelkammer 21 mündet, und an die Rücklaufleitung 91 anschließbar sind. Dazu sind die Zuleitungen 37 bzw. 38 mit Rückschlagventilen 39 bzw. 40 versehen und Leitungen 41 und 42, die mit einer Kammer 45 verbunden sind, sind ebenfalls mit zwei Rückschlagventilen 43 und 44 ausgestattet. Über eine Leitung 46 ist die Kammer 45 an die Rücklaufleitung 91 angeschlossen.

Zur Betätigung des Förderkolbens 33 sind zwei Druckräume 49 bzw. 50 vorgesehen, in die wechselweise Druckmittel einbringbar ist. Der Druckraum 49 ist hierbei durch eine an dem Förderkolben 33 angebrachte Kolbenstange 48 und den Zylinder 33, in den die Kolbenstange 48 eingreift, gebildet. Der Druckraum 50 ist in der Kolbenstange 48 vorgesehen, in die ein Ansatzstück 47 des Zylinders 33 hineinragt. Mit Hilfe von Magnetventilen 53 bzw. 54 kann den Druckräumen 49 bzw. 50 wechselweise aus den Zuführungsleitungen 51 bzw. 52 über Leitungen 55 bzw. 56 Druckmittel zugeführt werden.

In der in Figur 1 gezeigten Betriebsstellung ist der Druckraum 49 mit Druckmittel beaufschlagt und der Förderkolben 33 wird somit nach links verschoben. Dabei wird Leckageflüssigkeit aus der Sammelkammer 21 über das geöffnete Rückschlagventil 39 in den Druckraum 34 gesaugt und die in den Druckraum 35 befindliche Leckageflüssigkeit wird bei geöffnetem Rückschlagventil 44 in die Rücklaufleitung 91 und in den an diese angeschlossenen Sammelbehälter 92 ausgestoßen.

Bei umgekehrter Bewegungsrichtung des Verstellkolbens 33 wird dagegen, wie dies in Figur 2 gezeigt ist, die in dem Druckraum 34 befindliche Leckageflüssigkeit über das geöffnete Rückschlagventil 43 in die Rücklaufleitung 91 gedrückt und Leckageflüssigkeit wird bei geöffnetem Rückschlagventil 40 in den Druckraum 35 gesaugt.

Um auszuschließen, dass die Verstellbewegungen des Förderkolbens 33 bei Druckmittelführung in die Druckräume 49 bzw. 50 zu schnell ausgeführt werden, sind in die Leitungen 55 und 56 Drosseln 57 bzw. 58 eingesetzt. Die Fließgeschwindigkeit wird dadurch begrenzt, so dass die Verstellbewegungen des Förderkolbens 33 gesteuert erfolgt.

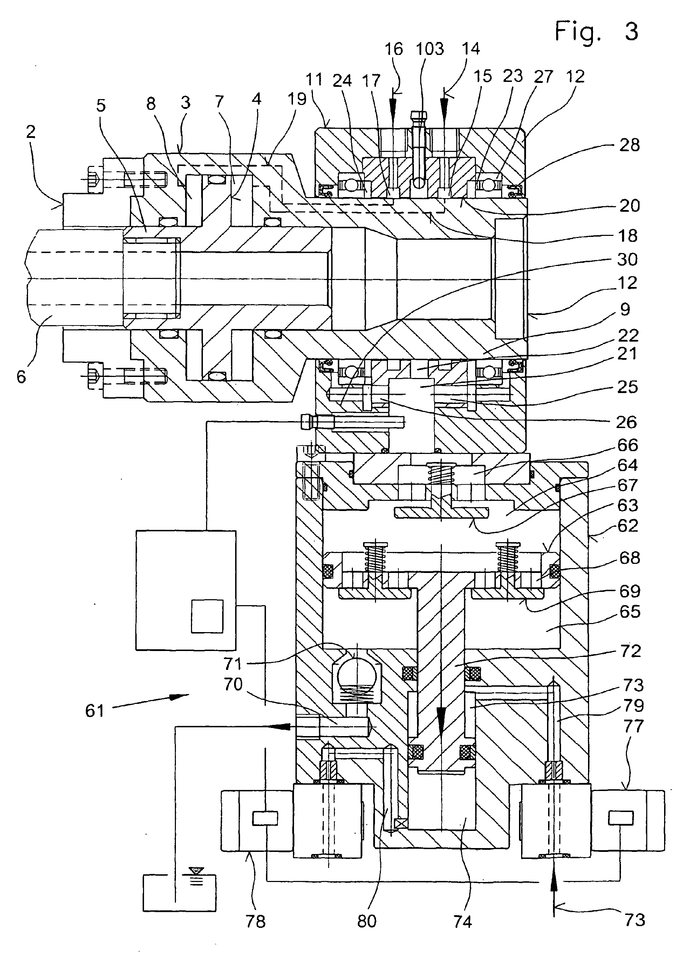

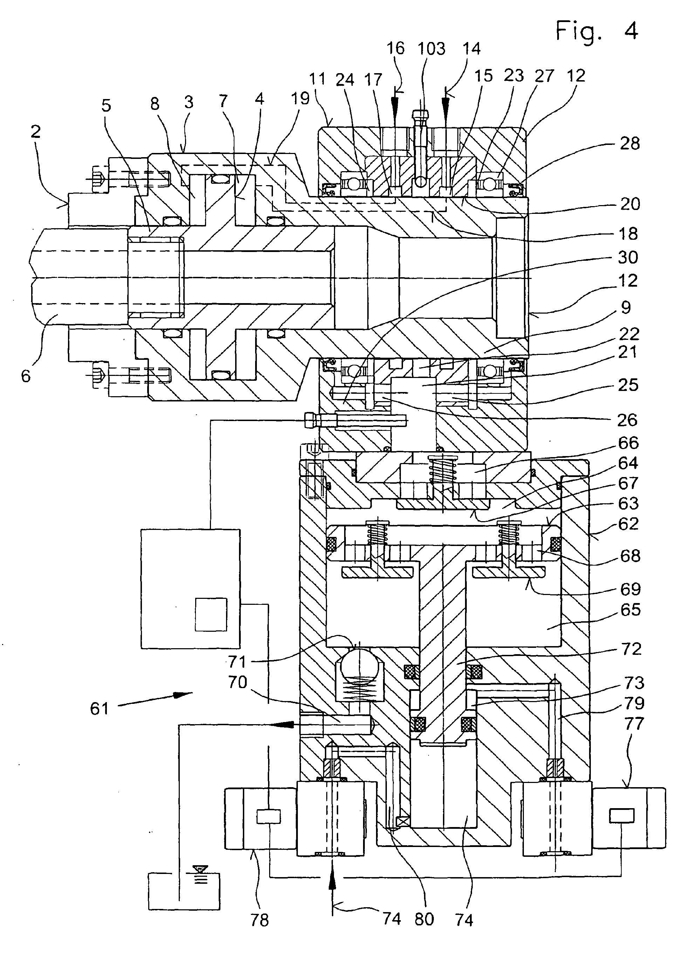

Das in den Figuren 3 und 4 dargestellte Förderaggregat 61 besteht ebenfalls aus einem in einem Zylinder 62 eingesetzten Förderkolben 63, dessen zugeordnete Füllraum 64 über Bohrungen 68 sowie diese verschließbare Rückschlagventile 69 mit dem Druckraum 65 verbunden ist. Außerdem ist eine Verbindungsleitung 66 zwischen der Sammelkammer 21 und dem Füllraum 64 mit Hilfe eines Rückschlagventils 67 absperrbar. Über eine Leitung 70, in die ebenfalls ein Rückschlagventil 71 eingesetzt ist, ist der Druckraum 65 mit der Rücklaufleitung 91 verbindbar.

Zur Betätigung des Förderkolbens 63 sind wiederum zwei Druckräume 73 und 74 vorgesehen, die durch eine an dem Förderkolben 63 angeformte Kolbenstange 72 und den Zylinder 62, in den die Kolbenstange 72 eingreift, gebildet sind.

Wird dem Druckraum 73 mit Hilfe eines ansteuerbaren Magnetventils 77 aus einer Druckmittelzuführungsleitung 75 über eine Leitung 79 Druckmittel zugeleitet, so wird der Förderkolben 63, wie dies in Figur 3 gezeigt ist, nach unten bewegt. Das Rückschlagventil 69 ist dabei geschlossen. Das Rückschlagventil 71 ist dagegen geöffnet, so dass die in dem Druckraum 65 befindliche Leckageflüssigkeit über die Leitung 70 und die Rücklaufleitung 91 in den Sammelbehälter 92 gedrückt wird. Das Rückschlagventil 67 wird dabei geöffnet. Leckageflüssigkeit kann somit aus der Sammelkammer 21 in den Füllraum 64 gesaugt werden.

Bei einer Beaufschlagung des Druckraumes 74 mittels eines Druckmittels, das mit Hilfe eines Magnetventils 78 von einer Druckmittelzuführungsleitung 76 über eine Leitung 80 in den Druckraum 74 gelangt, wird gem. Figur 1 dagegen der Förderkolben 63 vertikal nach oben verschoben. Durch den sich in dem Druckraum 65 bildenden Unterdruck sowie durch die Kraft einer Feder wird das Rückschlagventil 71 geschlossen, die in den Förderkolben 63 eingesetzten Rückschlagventile 69 werden dagegen geöffnet, so dass das in den Füllraum 64 befindliche Druckmittel durch diese in den Druckraum 65 strömt bzw. durch den Förderkolben 63 bei geschlossenem Rückschlagventil 67 in diesen gedrückt wird.

Gemäß Figur 5 ist als Förderaggregat 81 eine in einem an den Drehverteiler 11 angeflanschten Gehäuse 82 eingesetzte Flügelzellenpumpe 83 vorgesehen, die durch einen Elektromotor 86 rotierend antreibbar ist. Die Zuleitung 88 der Flügelzellenpumpe 83, die in die von deren mittels eines Gleitlagers 87 abgestützten Rotor 84 durchfahrenen Druckkammern 85 mündet, ist an die Sammelkammer 21 angeschlossen. Die Austrittsleitung 89 ist mit der Rücklaufleitung 91 verbunden. Mit Hilfe der Flügelzellenpumpe 83 kann somit ebenfalls Leckageflüssigkeit aus der Sammelkammer 21 abgesaugt und dem Sammelbehälter 92 unter Druck zugeführt werden.

Allen gezeigten Dosieraggregaten 31, 61 und 81 ist jeweils eine Steuereinrichtung 101 zugeordnet, mittels denen über Signalleitungen 106 und 107 die Magnetventile 53, 54 bzw. 77, 78 ansteuerbar sind. Außerdem ist die Sammelkammer 21 mit einem Füllstandsensor 102 und der Drehverteiler 11 mit einem in der Ringkammer 22 angeordneten Drucksensor 103 ausgestattet, die ebenfalls über Signalleitungen 104 bzw. 105 mit der Steuereinrichtung 101 verbunden sind. Auf diese Weise können die Dosieraggregate 31, 61 oder 81 in Abhängigkeit von dem jeweiligen Betriebszustand in der Sammelkammer 21 und/oder der Ringkammer 22 aktiviert werden.

Des Weiteren ist es möglich, mit Hilfe eines in der Steuereinrichtung 101 vorgesehenen schematisch dargestellten Zeitschaltrelais 108 die Dosieraggregate 31, 61 oder 81 für wählbare Zeitintervalle oder impulsweise in Betrieb zu nehmen. Eine stets ausreichende Abführung der anfallenden Leckageflüssigkeit ist somit zu bewerkstelligen. A 70001 e-ri / 02. Mai 2006

## Patentansprüche

1. Einrichtung (1) zur Übertragung einer Hydraulikflüssigkeit aus einem ortsfest angeordneten ersten Bauteil (12) in ein in dieses eingesetztes rotierend antreibbares zweites Bauteil (13), insbesondere zur Überführung eines Druckmittels von einem Drehverteiler (11) in einen Hohlspannzylinder (3), wobei zwischen den beiden Bauteilen (12, 13) mindestens eine Ringkammer (15, 17) vorgesehen ist, die an eine Zuführungsleitung (14, 16) sowie an eine zu einem Verbraucher (4) führende Druckmittelleitung (18, 19) für das zu übertragende Medium angeschlossen ist, und beiderseits der Ringkammer (15, 17) jeweils ein mit dieser verbundener, axial und/oder radial gerichteter Dichtspalt (20) verläuft, die in eine Sammelkammer (21) münden und diese über eine Rücklaufleitung (91) an einen Sammelbehälter (92) zur Aufnahme der aus den Dichtspalten (20) austretenden Leckageflüssigkeit angeschlossen sind,
**dadurch gekennzeichnet,**
**dass** in die an die Sammelkammer (21) angeschlossene Rücklaufleitung (91) ein Förderaggregat (31, 61, 81) eingesetzt ist, mittels dem die Leckageflüssigkeit aus der Sammelkammer (21) absaugbar und/oder unter Druck dem Sammelbehälter (92) zuführbar ist.

2. Einrichtung nach Anspruch 1,
**dadurch gekennzeichnet,**
**dass** das Förderaggregat (31) als beidseitig von Druckmittel beaufschlagbarer in einen Zylinder (32) eingesetzter Förderkolben (33) ausgebildet ist, dessen zugeordnete Druckräume (34, 35) über Rückschlagventile (39, 40 bzw. 43, 44) wechselweise mit der Sammelkammer (21) und dem Sammelbehälter (92) verbindbar sind.

3. Einrichtung nach Anspruch 1,
**dadurch gekennzeichnet,**
**dass** das Förderaggregat (61) als antreibbarer in einem Zylinder (62) eingesetzter Förderkolben (63) ausgebildet ist, dessen zugeordneter Druck- und Füllraum (64, 65) über Rückschlagventile (69) miteinander verbindbar sind und wobei der Füllraum (64) über ein Absperrventil (67) mit der Sammelkammer (21) und der Druckraum (65) über ein Absperrventil (71) an den Sammelbehälter (92) anschließbar sind.

4. Einrichtung nach Anspruch 1,
**dadurch gekennzeichnet,**
**dass** das Förderaggregat (81) als motorisch antreibbare Flügelzellenpumpe (83) oder als Zahnradpumpe angeordnet ist, deren von einem Rotor (84) überdeckten Saug- und Druckkanäle wechselseitig mit der Sammelkammer (21) und dem Sammelbehälter (92) verbindbar sind.

5. Einrichtung nach einem oder mehreren
der Ansprüche 1 bis 4,
**dadurch gekennzeichnet ,**
**dass** das Förderaggregat (31, 61, 81) über eine Steuereinrichtung (101) in Abhängigkeit von dem in der Sammelkammer (21) und/oder einer Ringkammer (22) herrschenden Druck und/oder einer Füllmenge steuerbar ist.

6. Einrichtung nach Anspruch 5,
**dadurch gekennzeichnet,**
**dass** die Sammelkammer (21) mit einem Füllstandsensor (103) versehen ist, der an die Steuereinrichtung (101) angeschlossen ist.

7. Einrichtung nach Anspruch 5,
**dadurch gekennzeichnet,**
**dass** in einer in dem ersten ortsfest angeordneten Bauteil (12) vorgesehenen Ringkammer (22) ein Drucksensor (102) eingesetzt ist, der mit der Steuereinrichtung (101) elektrisch verbunden ist.

8. Einrichtung nach einem oder mehreren
der Ansprüche 1 bis 3,
**dadurch gekennzeichnet,**
**dass** die Fließgeschwindigkeit des in den jeweiligen Druckraum (34 bzw. 35) des Verstellkolbens (33) einströmenden Druckmittels regelbar ist.

9. Einrichtung nach Anspruch 8,
**dadurch gekennzeichnet ,**
**dass** zur Regelung der in die Druckräume (34, 35) des Verstellkolbens (33) einströmenden Druckmittels dieses über eine vorzugsweise einstellbare Drossel (57 bzw. 58) leitbar ist.

10. Einrichtung nach einem oder mehreren
der Ansprüche 1 bis 9,
**dadurch gekennzeichnet ,**
**dass** das Förderaggregat (31, 61, 81) für vorzugsweise einstellbare Zeitspannen oder impulsweise einschaltbar ist.

11. Einrichtung nach Anspruch 10,
**dadurch gekennzeichnet ,**
**dass** zur zeit- oder impulsabhängigen Einschaltbarkeit des Förderaggregates (31, 61, 81) die Steuereinrichtung (101) mit einem Zeitschaltrelais (108) versehen ist, mittels dem dem Förderkolben (33 bzw. 63) zugeordnete Magnetventile (53, 54 bzw. 77, 78) oder der Antriebsmotor (86) der Flügelzellen- bzw. Zahnradpumpe (83)wahlweie einschaltbar sind.

## Claims

1. A device (1) for transmitting a hydraulic fluid from a first component (12) in a stationary arrangement into a second component (13) inserted in the first that can be driven so as to rotate, in particular for transferring a pressurised fluid from a rotary distributor (11) to a hollow clamping cylinder (3), with at least one ring chamber (15, 17) provided between the two components (12, 13) that is connected to a supply line (14, 16) as well as to a compressed fluid line (18, 19) leading to a consumer (4) for the medium to be transferred, and with one axially and/or radially directed sealing gap (20) each running on both sides of the ring chamber (15, 17) with the sealing gaps (20) opening into a collecting chamber (21) connected via a return line (91) to a collecting tank (92) for holding the leakage fluid emerging from the sealing gaps (20),
**characterised in that**,
a pumping unit (31, 61, 81) is inserted in the return line (91) connected to the collecting chamber (21), by means of which pumping unit (31, 61, 81) the leakage fluid from the collecting chamber (21) can be sucked up and/or supplied to the collecting tank (92) under pressure.

2. The device in accordance with Claim 1,
**characterised in that**
the pumping unit (31) is configured as a pump piston (33) inserted in a cylinder (32) with pressurised fluid acting on it from both sides, the associated pressure spaces (34. 35) of which can be alternately connected to the collecting chamber (21) and the collecting tank (92) by means of non-return valves (39, 40 or 43, 44).

3. The device in accordance with Claim 1,
**characterised in that**
the pumping unit (61) is configured as a pump piston (63) drivably inserted in cylinder (62), the associated pressure and filling spaces (64, 65) are connected together by non-return valves (69) and in which the filling space (64) can be connected to the collecting chamber (21) by means of a blocking valve (67) and the pressure space (65) can be connected to the collecting tank (92) by means of a blocking valve (71).

4. The device in accordance Claim 1,
**characterised in that**
the pumping unit (81) is arranged as a motor-driven vane cell pump (83) or as a gear pump, the suction and pressure channels of which are covered by a rotor (84) and can be alternately connected to the collecting chamber (21) and the collecting tank (92).

5. The device in accordance with one or more of Claims 1 to 4,
**characterised in that**
the pumping unit (31, 61, 81) can be controlled by a control device (101) according to the pressure prevailing in the collecting chamber (21) and/or a ring chamber (22) and/or according to a fill volume.

6. The device in accordance with Claim 5,
**characterised in that**
the collecting chamber (21) is provided with a fill level sensor (103) that is connected to the control device (101).

7. The device in accordance with Claim 5,
**characterised in that**
a pressure sensor (102) is inserted in a ring chamber (22) provided in the first component (12) in a stationary arrangement, and the pressure sensor (102) is electrically connected to the control device (101).

8. The device in accordance with one or more of Claims 1 to 3,
**characterised in that**
the flow speed of the pressurised fluid flowing into the particular pressure space (34 or 35) of the adjusting piston (33) can be controlled.

9. The device in accordance with Claim 8,
**characterised in that**
in order to control the pressurised fluid flowing into the pressure chambers (34, 35) of the adjusting piston (33), the fluid can be passed through a throttle (57 or 58) which, in a preferred embodiment, is adjustable.

10. The device in accordance with one or more of Claims 1 to 9,
**characterised in that**
the pumping unit (31, 61, 81) can be switched on for, in a preferred embodiment, adjustable time intervals or in a pulsed manner.

11. The device in accordance with Claim 10,
**characterised in that**
in order for the pumping unit (31, 61, 81) to be switched on based on time or in a pulsed manner, the control device (101) is provided with a time switching relay (108) by means of which the solenoid valves (53, 54 or 77, 78) assigned to the pumping piston (33 or 63) or the drive motor (86) of the vane cell or geared pump (83) can be switched on in a selected manner.

## Revendications

1. Equipement (1) pour le transfert d'un liquide hydraulique en provenance d'un premier composant stationnaire (12) vers un deuxième composant (13) prévu dans celui-ci et entraîné en rotation, en particulier pour le transfert d'un milieu sous pression à partir d'un distributeur rotatif (11) vers un cylindre de serrage creux (3), où, entre les deux composants (12, 13), il est prévu au moins une chambre annulaire (15, 17) raccordée à une conduite d'arrivée (14, 16) et à une conduite (18, 19) pour le milieu à transférer vers un consommateur (4), et où de part et d'autre de la chambre annulaire (15, 17) il est prévu respectivement, liée à celle-ci, une fente d'étoupage axiale et/ou radiale (20), aboutissant dans une chambre de récupération (21), qui est raccordée par l'intermédiaire d'une conduite de retour (91) à un collecteur (92) recevant le liquide de fuite sortant des fentes d'étoupage (20),
**caractérisé en ce que**
dans la conduite de retour (91) raccordée à la chambre de récupération (21), il est inséré un groupe de refoulement (31, 61, 81) permettant d'aspirer le liquide de fuite de la chambre de récupération (21) et/ou de le refouler sous pression vers le collecteur (92).

2. Equipement d'après la revendication 1,
**caractérisé en ce que**
le groupe de refoulement (31) est conçu sous la forme d'un piston d'alimentation (33) soumis de part et d'autre au milieu sous pression et inséré dans un cylindre (32), dont les chambres de pression assignées (34, 35) se laissent raccorder alternativement par l'intermédiaire de clapets anti-retour (39, 40 ou 43, 44) à la chambre de récupération (21) et au collecteur (92).

3. Equipement d'après la revendication 1,
**caractérisé en ce que**
le groupe de refoulement (61) est conçu sous la forme d'un piston d'alimentation (63) entraîné et inséré dans un cylindre (62) dont les chambres de pression et de remplissage assignées (64, 65) se laissent raccorder l'une à l'autre par l'intermédiaire de clapets anti-retour (69), et où la chambre de remplissage (64) se laisse raccorder par l'intermédiaire d'une soupape de barrage (67) à la chambre de récupération (21), tandis que la chambre de pression (65) se laisse raccorder par l'intermédiaire d'une soupape de barrage (71) au collecteur (92).

4. Equipement d'après la revendication 1,
**caractérisé en ce que**
le groupe de refoulement (81) est conçu sous la forme d'une pompe à palettes motorisée (83) ou d'une pompe à engrenages dont les canaux d'aspiration et de pression recouverts par un rotor (84) se laissent raccorder alternativement à la chambre de récupération (21) ou au collecteur (92).

5. Equipement d'après une ou plusieurs des revendications 1 à 4,
**caractérisé en ce que**
le groupe de refoulement (31, 61, 81) se laisse commander par une unité de commande (101) en dépendance de la pression dans la chambre de récupération (21) et/ou dans une chambre annulaire (22) et/ou en dépendance d'une quantité de remplissage.

6. Equipement d'après la revendication 5,
**caractérisé en ce que**
la chambre de récupération (21) est munie d'un capteur de niveau (103) raccordé à l'unité de commande (101).

7. Equipement d'après la revendication 5,
**caractérisé en ce que**
dans une chambre annulaire (22) prévue dans le premier composant stationnaire (12), il est prévu un capteur de pression (102) lié électriquement à l'unité de commande (101).

8. Equipement d'après une ou plusieurs des revendications 1 à 3,
**caractérisé en ce que**
la vitesse du flux du milieu sous pression entrant dans la chambre de pression respective (34 ou 35) du piston de réglage (33) se laisse régler.

9. Equipement d'après la revendication 5,
**caractérisé en ce que**
pour le réglage du milieu sous pression entrant dans les chambres de pression (34, 35) du piston de réglage (33), celui-ci se laisse diriger à travers un étrangleur de préférence réglable (57 ou 58).

10. Equipement d'après une ou plusieurs des revendications 1 à 9,
**caractérisé en ce que**
le groupe de refoulement (31, 61, 81) se laisse activer durant des temps de préférence réglables ou par impulsions.

11. Equipement d'après la revendication 10,
**caractérisé en ce que**
pour l'activation du groupe de refoulement (31, 61, 81) en dépendance du temps ou d'impulsions, l'unité de commande (101) est équipée d'un relais temporisé (108) permettant d'activer soit des électrovannes (53, 54 ou 77, 78) assignées au piston de refoulement (33 ou 63), soit le moteur d'entraînement (86) de la pompe à palettes ou de la pompe à engrenages (83).
